# EUROPÄISCHE PATENTSCHRIFT

(11) **EP 1 061 017 B1**
(45) Veröffentlichungstag und Bekanntmachung des Hinweises auf die Patenterteilung: **23.04.2003**
(21) Anmeldenummer: 00112482.5
(22) Anmeldetag: 13.06.2000
(51) Int. Cl.: B65G 39/12

(54) **Rollenbahn für den Transport und/oder die Lagerung von Stückgütern**
Roller conveyor for transporting and/or storing of articles
Transporteur à rouleaux pour le transport et/ou le stockage d'articles

(30) Priorität: 18.06.1999 DE 19927852
(43) Veröffentlichungstag der Anmeldung: 20.12.2000
(73) Patentinhaber: Dynamic Systems Engineering bv, 7005 BK Doetinchem (NL)
(72) Erfinder: Hollander, Rudolf Richard, 7251 Vorden (NL)
(74) Vertreter: Christophersen & Partner

(56) Entgegenhaltungen:
- FR-E- 75 445
- GB-A- 1 025 391
- GB-A- 2 101 061

## Beschreibung

Die Erfindung betrifft eine Rollenbahn für den Transport und/oder die Lagerung von Stückgütern, mit einer Vielzahl hintereinander entlang der Rollenbahn angeordneter Rollen, deren Enden mittels Achsen an sich zu beiden Seiten der Rollenbahn erstreckenden Profilen gelagert sind, wobei die ein- oder mehrfach vorhandenen Achsen in Längsrichtung der Rollen im wesentlichen starr angeordnet und Bestandteil von quer zur Längsrichtung der Rollen festlegbaren Halteelementen sind, welche lösbar an dem Profil befestigt sind, wobei die freien Enden der Achse in zylindrische Bohrungen in den Stirnseiten der Rollen ragen.

Rollenbahnen finden in der Fördertechnik und in der Lagertechnik Anwendung. Beim Einsatz in der Lagertechnik werden Rollenbahnen oft leicht geneigt angeordnet, so daß die darauf abgesetzten Stückgüter unter dem Einfluß der Schwerkraft selbsttätig bis an das tiefer gelegene Ende der Rollenbahn durchlaufen. Solche Rollenbahnen werden z. B. im Rahmen der Kommissioniertechnik eingesetzt.

Ein erster Typ von Rollenbahnen setzt sich aus einer Vielzahl schmaler, sowohl nebeneinander als auch hintereinander angeordneter, frei drehbarer Rollen zusammen. Bekannt sind ferner eher walzenförmige Rollen, die sich über die gesamte Breite der jeweiligen Rollenbahn erstrecken und zugleich die Breite der Aufstandsfläche für die Stückgüter in dieser Rollenbahn definieren. Die Lagerung der Rollen erfolgt über an beiden Enden angeordnete Drehachsen, die in Metallprofilen gelagert sind, welche sich beidseits entlang der Rollenbahn erstrecken. Die Metallprofile können ferner dazu herangezogen werden, die auf der Rollenbahn geförderten Waren in seitlicher Richtung zu führen. Hierzu sind die vertikalen Schenkel der Metallprofile verlängert, so daß sie einen Rand bilden, der über das Niveau der Rollenbahn hinausragt.

Von großer Bedeutung für eine preiswerte Montage derartiger Rollenbahnen ist das Einsetzen der Rollen in die feststehenden Teile der Rollenbahn, d. h. in die beidseits angeordneten Metallprofile. Bekannt sind hierzu Rollen mit darin angeordneter Achse, die durch eine innen angeordnete Feder belastet ist, so daß die Achse in den Rollenkörper hineingedrückt werden kann. Zur Montage in Metallprofilen, deren vertikale Schenkel mit entsprechenden Bohrungen versehen sind, wird die Rolle zunächst mit der Achse in die jeweilige Bohrung eingesetzt, dann die Achse in den Rollenkörper eingedrückt, und sodann das andere Ende der Rolle in Fluchtung zu der Bohrung des Profils gebracht, woraufhin die eingedrückte Achse dann entspannen und in die Bohrung einrasten kann. Die Entnahme der Rolle erfolgt in analoger Weise.

Die so gestalteten Rollen sind relativ teuer, da der Einsatz der zusätzlichen Druckfeder sowie die Sicherung der axial beweglichen Achse in dem Rollenkörper einen relativ hohen konstruktiven Aufwand verlangen. Auch kann sich die Montage und insbesondere eine automatische Montage schwierig gestalten, da beim Einsetzen der Rolle in die Rollenbahn unterschiedliche Bewegungen gleichzeitig durchgeführt werden müssen, nämlich das Eindrücken der axial beweglichen Achse in den Rollenkörper einerseits und das Absenken bzw. Verschwenken des betreffenden Endes der Rolle in die Rollenbahn andererseits.

Eine Rollenbahn mit den eingangs genannten Merkmalen ist aus der GB-A-1 025 391 bekannt. Die Rollen der Rollenbahn sind beidseitig an Halteelementen gelagert, die ihrerseits auf Profile aufsetzbar sind, die sich in Längsrichtung der Rollenbahn erstrecken. Die Halteelemente weisen einen Klemmabschnitt auf, mit dem sie ausschließlich durch Reibungskräfte auf den Profilen gehalten sind. Die Achsen zur Lagerung der Rolle sind an einem inneren Schenkel des jeweiligen Halteelementes starr angeformt.

Bei dieser Rollenbahn ist für die Sicherung der Position der Achsen alleine die Klemmkraft, welche das Halteelement auf das Profil zu übertragen vermag, verantwortlich. Falls diese Klemmkraft zu gering ausfällt oder im Laufe der Zeit nachläßt, kann es zu einem Verrutschen der Halteelemente in Längsrichtung des Profils kommen und damit unter Umständen zu einem Verkanten der Rolle mit der Folge eines erhöhten Rollwiderstands. Bei einer speziellen Ausführungsform der bekannten Rollenbahn wird daher vorgeschlagen, von außen in das Halteelement zusätzlich eine Madenschraube einzudrehen, welche zu einer besseren Fixierung des Halteelements in Längsrichtung des Profils führt. In Bezug auf eine schnelle und einfache Montage bleibt diese Lösung sehr unbefriedigend.

Der Erfindung liegt die **Aufgabe** zugrunde, eine Rollenbahn für den Transport und/oder die Lagerung von Stückgütern zu schaffen, bei der eine ungewollte Lageveränderung der Rollen in Bezug auf die Rollenbahn vermieden wird, und die sich montagefreundlich mit preiswert herstellbaren Rollen bestücken läßt.

Zur **Lösung** wird bei einer Rollenbahn der eingangs genannten Art vorgeschlagen, daß die Profile zur Lagesicherung der Achsen mit Befestigungsstrukturen in Gestalt von Durchbrüchen versehen sind, daß die Halteelemente Clips aus zueinander federnd ausgebildeten Schenkeln sind, von denen sich in montiertem Zustand ein Schenkel auf der Innenseite und ein weiterer Schenkel auf der Außenseite des Profils befindet und der eine Schenkel die Achse trägt, während sich der weitere Schenkel gegen die Außenseite des Profils abstützt, wobei ein an dem weiteren Schenkel ausgebildeter Vorsprung federnd in den jeweiligen Durchbruch des Profils eingreift.

Bei in dieser Weise ausgebildeten Rollen wird ein unbeabsichtigtes Lösen der Halteelemente von den Profilen vermieden, indem Vorsprünge federnd in Durchbrüche des Profils eingreifen. Die Montage der Rollen in der Rollenbahn erfolgt, indem die Rollen zunächst mit den Halteelementen versehen werden und die Rollen dann zusammen mit den Halteelementen in einer einfachen Bewegung von oben her in die beidseitig der Rollenbahn angeordneten Profile eingesetzt werden, wobei sich die Halteelemente mittels der federnden Vorsprünge selbsttätig verriegeln. Die Montage kann unter Einsatz eines Montageroboters erfolgen. An einem Halteelement können eine oder mehrere Achsen angeformt sein, so daß im Falle mehrerer Achsen die Rollen der Rollenbahn mit den Halteelementen zu Gruppen gebündelt eingesetzt werden können.

Im Rahmen der Montage der Rollenbahn läßt sich das Aufsetzen der Halteelemente auf die Profile weiter vereinfachen, wenn der Vorsprung an seinem oberen Rand mit einer Rastnase zur Verriegelung in dem Durchbruch des Profils, und an seinem unteren Rand mit einer Einführschräge versehen ist. Durch Druck auf das Halteelement weicht der mit der Einführschräge versehene Vorsprung zurück, woraufhin dieser dann anschließend mit seiner Rastnase hinter dem entsprechenden Durchbruch des Profils formschlüssig einrastet.

Dieser Formschluß muß zum Herausnehmen der Rolle aus der Rollenbahn wieder gelöst werden. Hierzu ist es von Vorteil, wenn der weitere Schenkel des Clips an seinem Ende mit einer von dem Profil abstehenden Grifflasche versehen ist. Die Grifflasche ermöglicht das Ergreifen jenes Schenkels des Halteelements, an dem sich der eingerastete Vorsprung befindet. Die Grifflasche ermöglicht daher ein besonders einfaches Herausnehmen der einzelnen Rolle aus der Rollenbahn, gegebenenfalls auch unter Einsatz eines Montageroboters.

In weiterer Ausgestaltung der Erfindung wird vorgeschlagen, daß die Schenkel des Clips über einen Steg miteinander verbunden sind, der sich auf einem nach oben weisenden Rand des Profils abstützt. Dies verbessert die Lagefixierung der Halteelemente an den Profilen. Die Lagefixierung wiederum führt zur Aufrechterhaltung einer genauen Fluchtung der beiden Achsen zueinander, so daß die Rolle verkantungsfrei und damit widerstandsarm in der Rollenbahn drehen kann. Zur Lagesicherung der Clips besteht eine vorteilhafte Lösung darin, daß der obere Rand des Profils im Abstand der Achsen mit Ausnehmungen versehen ist, in die die Stege der Clips hineinpassen.

Da die entlang der Rollenbahn angeordneten Profile die Halteelemente bzw. Clips aufnehmen, entfällt die Möglichkeit, den oberen Rand dieser Profile glattflächig zu gestalten. Die Profile sind dann aber nicht mehr in der Lage, als seitliche Führungsschienen für die über die Rollenbahn geförderten Stückgüter zu dienen. Mit einer weiteren Ausgestaltung der Erfindung wird daher der Weg beschritten, die Stückgüter nicht mittels der Profile zu führen, sondern unter Verwendung von Spurkränzen, mit denen zumindest eine Teilmenge der Rollen versehen ist, und vorzugsweise jede zweite Rolle.

Weitere Vorteile und Einzelheiten werden nachfolgend anhand der zugehörigen Zeichnungen erläutert. Darin zeigen:
- Fig. 1: einen Querschnitt durch eine Rollenbahn, wobei die Rollen kurz vor der Montage und noch oberhalb der Rollenbahn dargestellt sind;
- Fig. 2: eine Seitenansicht der Rollenbahn nach Fig. 1;
- Fig. 3a bis Fig. 3c: in drei Schritten sowie in Detailansicht Einzelheiten beim Einsetzen der Rolle in die Rollenbahn;
- Fig. 4a bis Fig. 4c: in drei Ansichten ein Ausführungsbeispiel eines Halteelements mit drei Achsen;
- Fig. 5: Einzelheiten der Montage von Rollen auf die Achsen der Halteelemente aus Fign. 4a bis 4c;
- Fig. 6: Einzelheiten der Montage von Halteelementen gemäß Fign. 4a bis 4c mit vormontierten Rollen auf einem Seitenprofil der Rollenbahn.

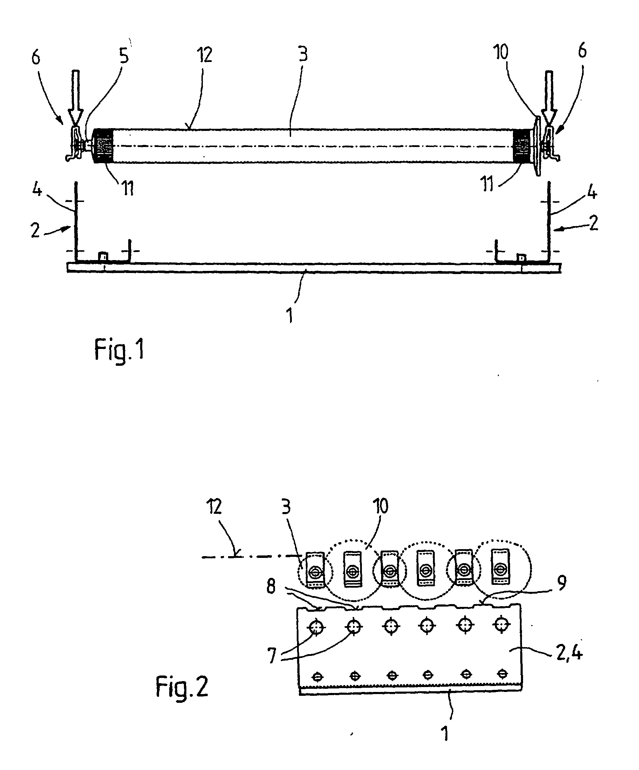

Fig. 1 zeigt den Blick entlang einer Rollenbahn mit einem Träger 1, darauf befestigten, symmetrisch zueinander angeordneten Profilen 2 sowie einer walzenförmigen Rolle 3, die im Rahmen der Montage der Rollenbahn in vertikale Schenkel 4 der beiden Profile 2 eingesetzt werden muß.

Über Achsen 5 sind die Rollen 3 in der Rollenbahn frei drehbar gelagert. Zur Verminderung des Drehwiderstandes können sich in der Rolle 3 kleine Wälzlager befinden, die die Achsen 5 aufnehmen. Die Fixierung der Achsen 5 erfolgt in Halteelementen 6 in Gestalt federnder Clips, die sich auf die vertikalen Schenkel 4 der Profile 2 aufsetzen und daran einrasten lassen. Beim Ausführungsbeispiel ist jedes Halteelement 6 mit einer einzigen Achse 5 versehen. Jedoch kann das Halteelement auch längergestreckt ausgebildet sein und dann zugleich mit zwei oder drei Achsen 5 versehen sein.

Die Fig. 2 läßt die Gestalt des Profils 2 erkennen. Dessen vertikaler Schenkel ist im Abstand der Rollen bzw. Achsen mit Durchbrüchen in Gestalt von Löchern 7 versehen. Zusätzlich befindet sich über jedem Loch 7 eine Ausnehmung 8 im oberen Rand 9 des Profils.

Fig. 2 läßt ferner erkennen, daß jede zweite Rolle 3 mit daran an zumindest einem Ende fest angeformten Spurkränzen 10 versehen ist. Mittels der Spurkränze werden die über die Rollenbahn geforderten Stückgüter in seitliche Richtung geführt. Reibungserhöhende Abschnitte 11 des Rollenkörpers ermöglichen ein einzelnes oder gruppenweises Abbremsen der Rollen 3 mittels geeigneter Bremseinrichtungen, um so beim Einsatz der Rollenbahn in einem geneigten Kommissionierregal eine zu hohe Transportgeschwindigkeit der Stückgüter zu verhindern. Strichpunktiert ist in Fig. 2 die Transportebene 12 eingezeichnet, die von den Spurkränzen 10 der Rollen 3 überragt wird.

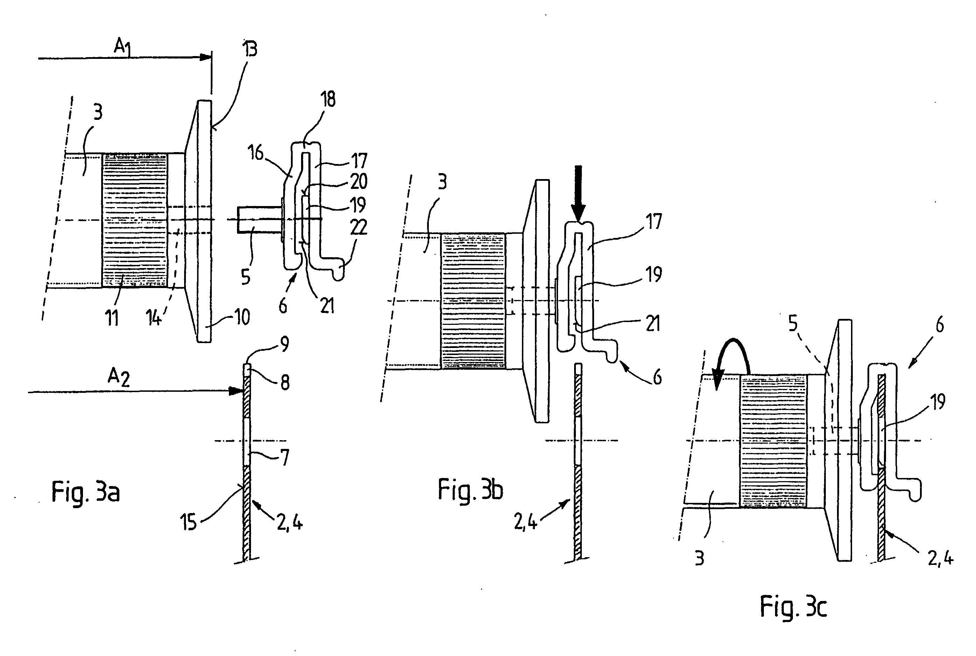

Anhand der Fig. 3a bis 3c werden nunmehr Einzelheiten der Halteelemente bzw. Clips 6 und deren Funktion im Rahmen der Montage der Rollen in der Rollenbahn erläutert. Die Rollen nach den Fig. 3a bis 3c sind mit keiner eigenen Achse versehen, vielmehr weisen sie in den Stirnflächen 13 lediglich eine Bohrung 14 zur Aufnahme der Achse 5 auf. Die Bohrung 14 kann auch die Innenfläche eines Wälzlagers sein. Der Abstand A₁ zwischen den beiden Stirnflächen 13 der Rolle 3 ist nur geringfügig kleiner, als der Abstand A₂ zwischen den Innenseiten 15 der beiden Profile 2. Wäre daher die Rolle mit feststehenden Achsen versehen, ließe sich die Rolle nicht ohne weiteres in die Profile 2 einsetzen. Erfindungsgemäß sind jedoch die Achsen 5 nicht unmittelbar in die Löcher 7 der Profile 2 eingesetzt, sondern es erfolgt eine mittelbare Lagerung der Rollen an den Profilen unter Verwendung der Clips 6.

Jeder Clip besteht aus einem ersten Schenkel 16, einem dazu im wesentlichen parallelen zweiten Schenkel 17 sowie einem Steg 18 zwischen erstem und zweitem Schenkel. An dem ersten Schenkel 16 ist bei der Ausführungsform nach den Fig. 3a bis 3c die Achse 5 befestigt. Der zweite Schenkel 17 ist an seiner dem ersten Schenkel 16 zugewandten Innenseite mit einem Vorsprung 19 versehen, der vorzugsweise einstückiger Bestandteil des Clips 6 ist. Der Vorsprung ist geringfügig kleiner als das Loch 7 des Profils 2. An seinem oberen Rand ist der Vorsprung 19 mit einer Rastnase 20 versehen, an seinem unteren Rand mit einer Einführschräge 21. Der zweite Schenkel 17 des Clips 6 läuft an seinem unteren Ende in einer von dem ersten Schenkel 16 wegweisenden Grifflasche 22 aus.

Die beiden Schenkel 16, 17 des Clips 6 sind zueinander federnd ausgebildet. Hierzu besteht der Clip 6 aus einem in geeigneter Weise federnden Material, z. B. aus gebogenem Stahlblech oder aus Kunststoff. Unabhängig von dem Material des Clips kann die Achse beispielsweise aus Metall oder aus Kunststoff bestehen. Eine Metallachse bietet hierbei besseres Verschleißverhalten, wohingegen eine Kunststoffachse gute Gleiteigenschaften aufweist. Um sowohl die hohe Stabilität von Metall als auch die Gleiteigenschaften von Kunststoff auszunutzen, kann die Achse auch als Komposit gebildet sein. Dies ist beispielsweise bei einer Kunststoffachse mit Metallkern der Fall. Ein solcher Metallkern kann z. B. bereits bei einem Herstellungsverfahren der Clip/Achsen-Kombination durch Spritzgießen mit eingegossen werden.

Zum Einsetzen der Rolle in die Profile der Rollenbahn wird vorgegangen, wie dies in den Fig. 3a bis 3c in drei Stufen dargestellt ist. Zunächst wird gemäß Fig. 3a der Clip 6 mit der daran befestigten Achse 5 in die Bohrung 14 der Rolle 3 eingeführt. In gleicher Weise wird auch für das andere Ende der Rolle vorgegangen. Sodann wird die Rolle, wie dies in Fig. 1 dargestellt ist, horizontal von oben her mit den Clips 6 auf die beiden Profile 2 aufgesetzt. Hierbei gelangen die vertikalen Schenkel 4 der Profile 2 zwischen die beiden Schenkel 16, 17 der Clips, so daß der erste Schenkel 16 auf die Innenseite 15, und der zweite Schenkel 17 auf die Außenseite des Profils 2 gelangt. Dies läßt am besten die Fig. 3b erkennen. Beim Herunterdrücken der Clips 6 bewirkt die Einführschräge 21 des Vorsprungs 19, daß dieser nach außen zurückweichen kann. Sobald der Vorsprung 19 in Deckung zu dem Loch 7 gelangt, schnappt der Vorsprung 19 mit seiner Rastnase 20 in dem Loch 7 ein. Zugleich gelangt der Steg 18 in die Ausnehmung 8 im oberen Rand 9 des Profils 2, so daß der Clip 6 auch in seitlicher Richtung verriegelt ist, und insbesondere ein Verkanten der Achsen ausgeschlossen ist.

Zum Abnehmen der Rolle 3 wird in umgekehrter Reihenfolge vorgegangen, wobei der zweite Schenkel 17 durch eine nach außen gerichtete Bewegung der Grifflasche 22 so weit nach außen gebogen wird, daß die Rastnase 20 aus dem Loch 7 herausgelangt und somit die Verrastung entsperrt wird. Dies kann, ebenso wie das Einsetzen der Rollen in die Rollenbahn, maschinell und voll automatisch unter Einsatz eines Montagegerätes erfolgen.

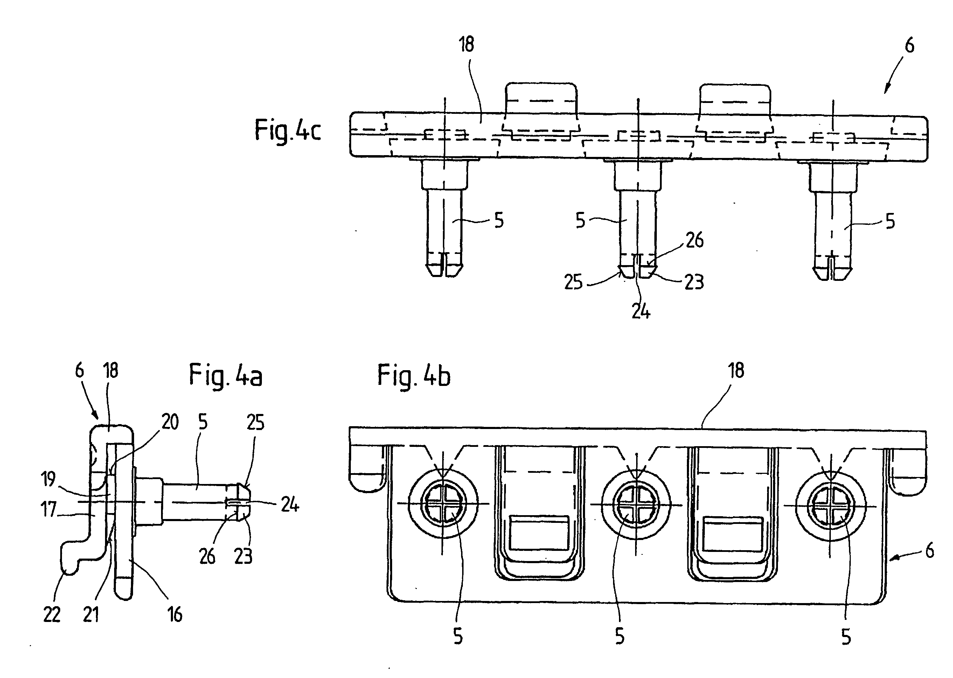

Die Ausführungsform nach den Fign. 4a bis 6 unterscheidet sich von der voranstehend beschriebenen Ausführungsform darin, daß an dem Clip 6 anstelle einer einzigen Achse mehrere Achsen, in diesem Falle drei Achsen, angeformt sind. Der Clip 6 ist in diesem Falle mit zwei Vorsprünge 19 aufweisenden zweiten Schenkeln 17 zur Verrastung in entsprechende Löcher 7 in den vertikalen Schenkeln des Profils ausgestattet. Die Achsen 5 dieses Clips 6 unterscheiden sich von der vorher geschilderten Ausführungsform dadurch, daß sie an ihrem von den Schenkel 16 des Clips 6 entfernt gelegenen Ende ein Arretierstück 23 aufweisen. Dieses ist mit über Kreuz geführten Schlitzen 24 versehen, die sich über eine gewisse Distanz in Richtung des Schenkels 16 erstrecken. Weiterhin verfügt das Arretierstück 23 über eine Einführschräge 25, sowie einen Rastvorsprung 26. Der Rastvorsprung ragt dabei geringfügig über den Außendurchmesser der Achse 5 hinaus. Beim Einführen der hier gezeigten Achse in eine entsprechende Bohrung 14 in der Stirnfläche 13 einer Rolle 3 wird das Arretierstück 23 an den über Kreuz geführten Schlitzen 24 zusammengedrückt und verrastet mittels des Rastvorsprunges im Innern der Bohrung 14 in der Rolle 3. Zum einfacheren Einführen der Achse 5 in die entsprechende Bohrung 14 in der Rolle 3 dient die Einführschräge 25. Eine einmal mit der Achse verbundene Rolle kann nun nur noch mit einem gewissen Mindestkraftaufwand voneinander getrennt werden.

Weiterhin sind an dem Steg 18 des Clips 6 in dieser Ausführungsform V-förmige Vorsprünge 30 angeformt, welche in entsprechende Ausnehmungen 8 an den vertikalen Schenkeln 4 des Profils 2 eingreifen und den auf dem Schenkel montierten Clip 6 somit relativ zu dem vertikalen Schenkel 4 des Profils 2 spielfrei festlegen.

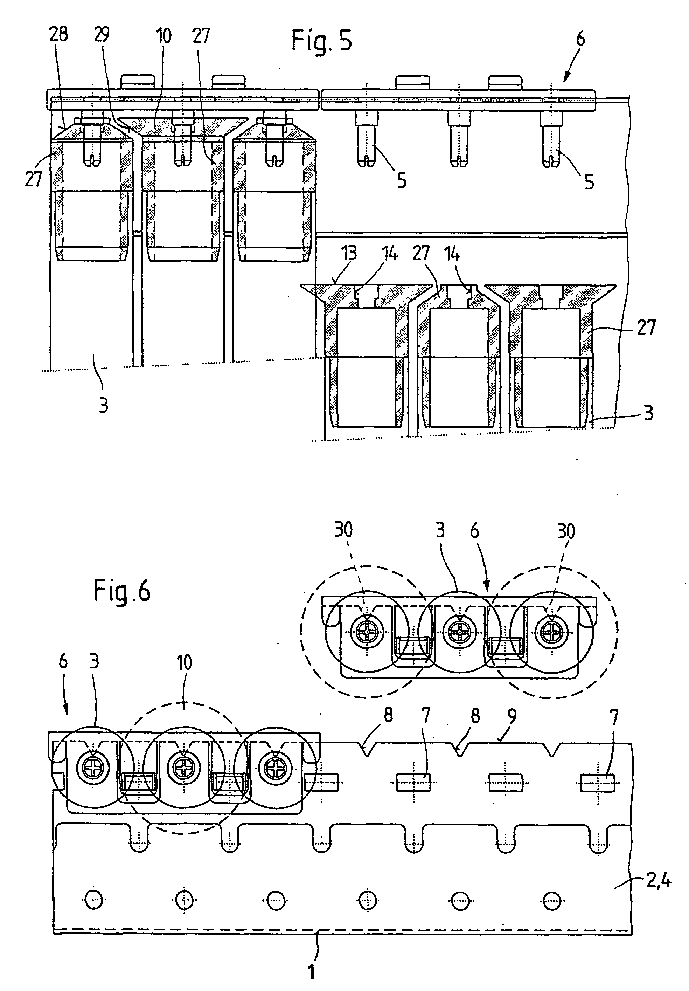

In der Fig. 5 ist gezeigt, wie jeweils drei Rollen 3 mit einem Clip 6 gemäß dieser Ausführungsform während der Vormontage verbunden werden. Die hier gezeigten Rollen 3 sind in ihren Endbereichen mit Hülsen 27 versehen. Bei fertig montierter Rollenbahn verfügt jede zweite der Hülsen über einen Spurkranz 10. In die Hülsen 27 sind die Bohrungen 14 geführt, in die die Achsen 5 eingreifen. Die Hülsen 27, die nicht mit einem Spurkranz 10 ausgestattet sind, weisen dabei stirnseitig Schrägen auf, die mit an den Spurkränzen 10 der Hülsen 27 benachbarter Rollen 3 ausgebildeten Schrägen 29 korrespondieren. So können Rollen mit maximal großen Spurkränzen 10 eng benachbart zu Rollen ohne Spurkränze zum Aufbau einer Rollenbahn mit möglichst weit ausladenden Spurkränzen 10 zusammengefügt werden.

Fig. 6 zeigt schließlich, wie zur Endmontage der Rollenbahn mit Rollen 3 verbundene Clips 6 auf die vertikalen Schenkel 4 des Profils 2 aufgesetzt und verrastet werden. Zu erkennen ist hier auch, wie die V-förmigen Vorsprünge 30 bei der Montage in entsprechende Ausnehmungen 8 des vertikalen Schenkels 4 des Profils 2 eingreifen, um die Clips sicher gegen Relativbewegungen gegenüber den Schenkeln festzulegen. Die Vorsprünge 30 sowie die Ausnehmungen 8 bzw. die Ausnehmungen 8 und die Verbindungsstege 16 im erstgenannten Ausführungsbeispiel gleichen dabei ein für Montagezwecke günstiges, beabsichtigtes Spiel zwischen den Löchern 7 und den Vorsprüngen 19 aus, welches ansonsten eine Relativbewegung der Clips 6 in Längsrichtung des Profils 2 der Rollenbahn erlauben würde.

### Bezugszeichenliste

- 1: Träger
- 2: Profil
- 3: Rolle
- 4: vertikaler Schenkel des Profils
- 5: Achse
- 6: Halteelement, Clip
- 7: Loch
- 8: Ausnehmung
- 9: oberer Rand des Profils
- 10: Spurkranz
- 11: reibungserhöhender Abschnitt
- 12: Transportebene
- 13: Stirnfläche
- 14: Bohrung
- 15: Innenseite des Profile
- 16: erster Schenkel
- 17: zweiter Schenkel
- 18: Steg
- 19: Vorsprung
- 20: Rastnase
- 21: Einführschräge
- 22: Grifflasche
- 23: Arretierstück
- 24: Schlitz
- 25: Einführschräge
- 26: Rastvorsprung
- 27: Hülse
- 28: Schräge
- 29: Schräge
- 30: V-förmiger Vorsprung

- A₁: Abstand
- A₂: Abstand

## Patentansprüche

1. Rollenbahn für den Transport und/oder die Lagerung von Stückgütern, mit einer Vielzahl hintereinander entlang der Rollenbahn angeordneter Rollen (3), deren Enden mittels Achsen (5) an sich zu beiden Seiten der Rollenbahn erstreckenden Profilen (2) gelagert sind, wobei die ein- oder mehrfach vorhandenen Achsen (5) in Längsrichtung der Rollen (3) im wesentlichen starr angeordnet und Bestandteil von quer zur Längsrichtung der Rollen festlegbaren Halteelementen (6) sind, welche lösbar an dem Profil (2) befestigt sind, wobei die freien Enden der Achsen (5) in zylindrische Bohrungen (14) in den Stirnseiten (13) der Rollen (3) ragen,
**dadurch gekennzeichnet,**
**daß** die Profile (2) zur Lagesicherung der Achsen (5) mit Befestigungsstrukturen in Gestalt von Durchbrüchen (7) versehen sind, daß die Halteelemente Clips (6) aus zueinander federnd ausgebildeten Schenkeln (16, 17) sind, von denen sich in montiertem Zustand ein Schenkel (16) auf der Innenseite (15) und ein weiterer Schenkel (17) auf der Außenseite des Profils (2) befindet und der eine Schenkel (16) die Achse (5) trägt, während sich der weitere Schenkel (17) gegen die Außenseite des Profils (2) abstützt, wobei ein an dem weiteren Schenkel (17) ausgebildeter Vorsprung (19) federnd in den jeweiligen Durchbruch (7) des Profils (2) eingreift.

2. Rollenbahn nach Anspruch 1, **dadurch gekennzeichnet, daß** beide Enden der Rollen über jeweils ein Halteelement (6) an dem jeweiligen Profil (2) gelagert sind, und daß die Gesamtlänge (A₁) der Rollen (3) geringer ist als der Abstand (A₂) zwischen den Innenseiten (15) der Profile (2).

3. Rollenbahn nach Anspruch 2, **dadurch gekennzeichnet, daß** der Vorsprung (19) an der Innenseite des weiteren Schenkels (17) des Clips (6) angeformt ist.

4. Rollenbahn nach einem der Ansprüche 1 bis 3, **dadurch gekennzeichnet, daß** der Vorsprung (19) an seinem oberen Rand mit einer Rastnase (20) zur Verriegelung in dem Durchbruch (7) des Profils (2), und an seinem unteren Rand mit einer Einführschräge (21) versehen ist.

5. Rollenbahn nach einem der Ansprüche 1, 3 oder 4, **dadurch gekennzeichnet, daß** der weitere Schenkel (17) des Clips (6) an seinem Ende mit einer von dem Profil (2) abstehenden Grifflasche (22) versehen ist.

6. Rollenbahn nach einem der Ansprüche 1, 3, 4 oder 5, **dadurch gekennzeichnet, daß** die Schenkel (16, 17) des Clips (6) über einen Steg (18) miteinander verbunden sind, der sich auf einem nach oben weisenden Rand des Profils (2) abstützt.

7. Rollenbahn nach Anspruch 6, **dadurch gekennzeichnet, daß** der obere Rand (9) des Profils (2) im Abstand der Achsen (5) mit Ausnehmungen (8) versehen ist, in die die Stege (18) oder Teile (30) davon hineinpassen.

8. Rollenbahn nach einem der vorangehenden Ansprüche, **dadurch gekennzeichnet, daß** zumindest eine Teilmenge der Rollen (3) mit angeformten Spurkränzen (10) versehen ist.

9. Rollenbahn nach einem der vorangehenden Ansprüche, **dadurch gekennzeichnet, daß** jedes der Halteelemente (6) nur eine einzige Achse (5) trägt.

10. Rollenbahn nach einem der Ansprüche 1 bis 8, **dadurch gekennzeichnet, daß** jedes Halteelement (6) mehrere Achsen (5) trägt.

## Claims

1. Roller conveyor for the transportation and/or storage of piece goods, having a multiplicity of rollers (3) which are arranged one behind another along the roller conveyor and the ends of which are mounted by means of axles (5) on profiles (2) extending on both sides of the roller conveyor, the axles (5), which are present singly or in multiples, being arranged essentially rigidly in the longitudinal direction of the rollers (3) and being part of retaining elements (6) which can be fixed transversely to the longitudinal direction of the rollers and are fastened releasably to the profile (2), the free ends of the axles (5) projecting into cylindrical holes (14) in the end sides (13) of the rollers (3), **characterized in that** the profiles (2) are provided with fastening structures in the form of apertures (7) for the positional securing of the axles (5), **in that** the retaining elements are clips (6) comprising legs (16, 17) which are formed resiliently with respect to each other and of which, when fitted, one leg (16) is situated on the inside (15) and a further leg (17) is situated on the outside of the profile (2) and the one leg (16) supports the axle (5) while the other leg (17) is supported against the outside of the profile (2), a projection (19) formed on the further leg (17) engaging resiliently in the particular aperture (7) of the profile (2).

2. Roller conveyor according to Claim 1, **characterized in that** both ends of the rollers are mounted on the particular profile (2) via a respective retaining element (6), and **in that** the overall length (A₁) of the rollers (3) is smaller than the distance (A₂) between the insides (15) of the profiles (2).

3. Roller conveyor according to Claim 2, **characterized in that** the projection (19) is integrally formed on the inside of the further leg (17) of the clip (6).

4. Roller conveyor according to one of Claims 1 to 3, **characterized in that** the projection (19) is provided on its upper edge with a latching lug (20) for locking in the aperture (7) of the profile (2), and is provided on its lower edge with an introducing slope (21).

5. Roller conveyor according to one of Claims 1, 3 or 4, **characterized in that** the further leg (17) of the clip (6) is provided at its end with a gripping tab (22) protruding from the profile (2).

6. Roller conveyor according to one of Claims 1, 3, 4 or 5, **characterized in that** the legs (16, 17) of the clip (6) are connected to each other via a web (18) which is supported on an upwardly facing edge of the profile (2).

7. Roller conveyor according to Claim 6, **characterized in that** the upper edge (9) of the profile (2) is provided, at the spacing of the axles (5), with recesses (8) into which the webs (18) or parts (30) thereof fit.

8. Roller conveyor according to one of the preceding claims, **characterized in that** at least some of the rollers (3) are provided with integrally formed wheel flanges (10).

9. Roller conveyor according to one of the preceding claims, **characterized in that** each of the retaining elements (6) only supports a single axle (5).

10. Roller conveyor according to one of Claims 1 to 8, **characterized in that** each retaining element (6) supports a plurality of axles (5).

## Revendications

1. Transporteur à rouleaux destiné au transport et/ou au stockage de marchandises de détail, comportant de multiples rouleaux (3) disposés les uns derrière les autres le long du transporteur à rouleaux, dont les extrémités sont montées au moyen d'axes (5) sur des profilés (2) s'étendant des deux côtés du transporteur à rouleaux, les axes (5) prévus en un ou plusieurs exemplaires étant pour l'essentiel disposés rigidement dans la direction longitudinale des rouleaux (3), et faisant partie intégrante d'éléments de retenue (6) pouvant être fixés transversalement à la direction longitudinale des rouleaux, lesquels sont fixés de façon amovible sur le profilé (2), les extrémités libres des axes (5) s'engageant dans des perçages cylindriques (14) pratiqués dans les faces frontales (13) des rouleaux (3),
**caractérisé en ce que**,
pour le blocage de la position des axes (5), les profilés (2) sont munis de structures de fixation sous la forme de traversées (7), **en ce que** les éléments de retenue sont des clips (6) constitués de branches (16, 17) élastiques l'une par rapport à l'autre, dont une branche (16) est située à l'état monté sur la face intérieure (15), et une autre branche (17) sur la face extérieure du profilé (2), et l'une des branches (16) portant l'axe (5), alors que l'autre branche (17) prend appui contre la face extérieure du profilé (2), une partie en saillie (19) formée sur l'autre branche (17) s'engageant élastiquement dans la traversée (7) respective du profilé (2).

2. Transporteur à rouleaux selon la revendication 1, **caractérisé en ce que** chacune des deux extrémités des rouleaux est montée sur le profilé (2) respectif par l'intermédiaire d'un élément de retenue (6), et **en ce que** la longueur totale (A₁) des rouleaux (3) est inférieure à l'écartement (A₂) entre les faces intérieures (15) des profilés (2).

3. Transporteur à rouleaux selon la revendication 2, **caractérisé en ce que** la partie en saillie (19) est formée sur la face intérieure de l'autre branche (17) du clip (6).

4. Transporteur à rouleaux selon l'une des revendications 1 à 3, **caractérisé en ce que** la partie en saillie (19) est munie d'un tenon d'encliquetage (20) au niveau de son bord supérieur pour le verrouillage dans la traversée (7) du profilé (2), et d'un biseau d'insertion (21) au niveau de son bord inférieur.

5. Transporteur à rouleaux selon l'une des revendications 1, 3 ou 4, **caractérisé en ce que** l'extrémité de l'autre branche (17) du clip (6) est munie d'une languette de préhension (22) écartée du profilé (2).

6. Transporteur à rouleaux selon l'une des revendications 1, 3, 4 ou 5, **caractérisé en ce que** les branches (16, 17) du clip (6) sont reliées entre elles par l'intermédiaire d'une barrette (18), qui prend appui sur un bord orienté vers le haut du profilé (2).

7. Transporteur à rouleaux selon la revendication 6, **caractérisé en ce que** le bord supérieur (9) du profilé (2) est muni d'évidements (8) pratiqués à un certain écartement des axes (5), dans lesquels s'engagent les barrettes (18) ou des parties (30) de celles-ci.

8. Transporteur à rouleaux selon l'une quelconque des revendications précédentes, **caractérisé en ce que** des boudins (10) sont formés sur une partie au moins des rouleaux (3).

9. Transporteur à rouleaux selon l'une quelconque des revendications précédentes, **caractérisé en ce que** chacun des éléments de retenue (6) ne porte qu'un seul axe (5).

10. Transporteur à rouleaux selon l'une quelconque des revendications 1 à 8, **caractérisé en ce que** chacun des éléments de retenue (6) porte plusieurs axes (5).
